# EUROPÄISCHE PATENTSCHRIFT

(11) **EP 3 610 465 B1**
(45) Veröffentlichungstag und Bekanntmachung des Hinweises auf die Patenterteilung: **07.05.2025**
(21) Anmeldenummer: 18712630.5
(22) Anmeldetag: 28.03.2018
(51) Int. Cl.: G07C 9/00

(54) **ZUGANGSKONTROLLSYSTEM MIT FUNK- UND GESICHTSERKENNUNG**
ACCESS CONTROL SYSTEM UTILIZING RADIO AND FACE RECOGNITION
SYSTÈME DE CONTRÔLE D'ACCÈS AVEC RECONNAISSANCE FACIALE ET RADIOÉLECTRIQUE

(30) Priorität: 10.04.2017 EP 17165812
(43) Veröffentlichungstag der Anmeldung: 19.02.2020
(73) Patentinhaber: INVENTIO AG, 6052 Hergiswil (CH)
(72) Erfinder: FRIEDLI, Paul, 5453 Remetschwil (CH)
(74) Vertreter: Inventio AG
(86) Internationale Anmeldenummer: PCT/EP2018/057968
(87) Internationale Veröffentlichungsnummer: WO 2018/188956

(56) Entgegenhaltungen:
- EP-A1- 1 475 754
- WO-A1-2005/045769
- WO-A1-2016/198548
- US-A1- 2005 110 610
- US-A1- 2015 015 365
- US-A1- 2015 221 151

## Beschreibung

Die hier beschriebene Technologie betrifft allgemein ein Zugangskontrollsystem, das einem berechtigten Nutzer Zugang zu einer zugangsbeschränkten Zone in einem Gebäude oder einem Gelände gewährt. Ausführungsbeispiele der Technologie betreffen insbesondere ein Zugangskontrollsystem mit einer Sende- und Empfangseinrichtung und ein Verfahren zum Betreiben eines solchen Zugangskontrollsystems.

Zugangskontrollsysteme können auf verschiedenste Art und Weise ausgestaltet sein. US 9,077,716 beschreibt beispielsweise ein Zugangskontrollsystem, in dem ein mobiles elektronisches Gerät mit einem elektronischen Türschloss mittels einer Bluetooth oder WLAN Funkverbindung und mit einem Web-Server mittels einer WAN (Wide Area Network) Funkverbindung kommuniziert, um das elektronische Schloss zu öffnen. Dazu sendet das mobile elektronische Gerät seine Geräte-Kennung und eine von einem Nutzer eingegebene Kennung des elektronischen Schlosses zum Web-Server, der die Zugangsberechtigung prüft und eine aus einem Schlossbefehl, der Schloss-Kennung und einem Code-Muster bestehende Antwort zum mobilen Gerät sendet. Das mobile Gerät sendet den Schlossbefehl und das Code-Muster zum elektronischen Schloss. Erkennt das Schloss den Schlossbefehl und das Code-Muster als gültig, wird es geöffnet.

WO 2010/112586 A1 beschreibt ein Zugangskontrollsystem, bei dem ein von einem Nutzer mitgeführtes Mobiltelefon einen Identifikationscode an einen Zugangsknoten sendet. Falls der Identifikationscode als gültig erkannt wird, sendet der Zugangsknoten einen Zugangscode an das Mobiltelefon, das den Zugangsknoten auf einer Anzeige dargestellt. Hält der Nutzer das Mobiltelefon an eine Kamera, so dass diese den dargestellten Zugangscode erfassen kann, überprüft das Zugangskontrollsystem, ob der erfasste Zugangscode gültig ist. Ist er gültig, wird dem Nutzer der Zugang gewährt.

Diese Zugangskontrollsysteme bieten eine gewisse Benutzerfreundlichkeit, weil die Nutzer keine Berechtigungsausweise oder herkömmliche Schlüssel bei sich tragen und sich keinen Zugangscode merken müssen. Stattdessen bietet das mobile elektronische Gerät, das viele Nutzer für Kommunikationszwecke sowieso bereits bei sich tragen, die Funktion eines Berechtigungsausweises oder Schlüssels. Trotz der Verwendung von mobilen Geräten, ist es bei diesen Zugangskontrollsystemen erforderlich, dass die Nutzer mit den mobilen Geräten hantieren. Es besteht daher Bedarf an einer anderen, noch benutzerfreundlicheren Technologie.

Die US 2015/221151 A1 betrifft ein auf Gesichtserkennung basierendes Zugangskontrollsystem und -verfahren, bei dem Lokalisierungssensoren die Position mobiler elektronischer Geräte in einem an einen Zugangsbereich anschließenden Bereich ermitteln und mindestens eine Kamera den an den Zugangsbereich anschließenden Bereich überwacht.

Ein Aspekt der vorliegenden Erfindung betrifft ein System nach Anspruch 12.

Ein anderer Aspekt betrifft ein Verfahren nach Anspruch 1.

Die hier beschriebene Technologie ergibt ein Zugangskontrollsystem, bei dem kein Hantieren mit dem mobilen elektronischen Gerät durch den Nutzer erforderlich ist, insbesondere nicht dann, wenn der Nutzer bereits am oder nahe des Zugangs (z. B. einer Tür) ist. Eine erste Phase einer Überprüfung, ob der Nutzer zugangsberechtigt ist, erfolgt bereits wenn der Nutzer noch relativ weit vom Zugang entfernt ist. Der Nutzer kann sich beispielsweise in Richtung des Zugangs zur zugangsbeschränkten Zone bewegen, währenddessen in einem Ausführungsbeispiel das mobile elektronische Gerät des Nutzers schon in Kommunikation mit der Send- und Empfangseinrichtung des Zugangskontrollsystems ist oder bereits war. Die Send- und Empfangseinrichtung empfängt dabei die Kennung des mobilen elektronischen Geräts, die, wenn der Nutzer als zugangsberechtigt registriert ist, einem gespeicherten Nutzerprofil zugeordnet ist. Alternativ dazu die Send- und Empfangseinrichtung die Kennung über ein Kommunikationsnetz empfangen. Kommt der Nutzer dann in einen Erfassungsbereich einer Kamera des Zugangskontrollsystems, werden in einer zweiten Phase aus einer Kameraaufnahme Gesichtsmerkmale des Nutzers ermittelt. Stimmen die ermittelten Gesichtsmerkmale mit in einem Nutzerprofil gespeicherten Gesichtsmerkmalen zu einem festgelegten Grad überein, ist der Nutzer zugangsberechtigt und Zugang wird gewährt, ohne dass der Nutzer mit dem mobilen elektronischen Gerät hantieren muss. Ein berechtigter Nutzer kann somit quasi nahtlos in die zugangsbeschränkte Zone gelangen.

Zu einer zugangsbeschränkten Zone in einem Gebäude oder einem Gebiet kann eine grosse Anzahl von Nutzern (z.B. mehrere Hundert oder Tausend) zugangsberechtigt sein; entsprechend dieser Anzahl sind Nutzerprofile angelegt. Trotzdem bietet die hier beschriebene Technologie den Vorteil, dass die Überprüfung auf Übereinstimmung schnell erfolgt, weil nicht alle Nutzerprofile der zugangsberechtigten Nutzer auf Übereinstimmung überprüft werden müssen, sondern nur die Nutzerprofile der tatsächlich anwesenden Nutzer. Ein anwesender Nutzer kann somit ohne wesentliche Stockung oder Verzögerung in die zugangsbeschränkte Zone gelangen. Dies reduziert vor allem bei hohem Verkehrsaufkommen das Risiko, dass sich vor dem Zugang eine Warteschlange bildet.

Die Technologie bietet nicht nur eine schnellere Überprüfung, sie kann auch bei hohen Anforderungen an die Sicherheit eingesetzt werden, weil beispielsweise eine zweimalige Authentifizierung erfolgt. Zum einen werden zwei verschiedene Kanäle verwendet: Funk für die Übertragung einer Kennung und optische Erfassung eines Gesichts eines Nutzers. Die Kennung muss im System zu einem registrierten Nutzer gehören, und die Auswertung der Gesichtsparameter muss auf einen registrierten Nutzer hinweisen. Zum anderen müssen weniger Nutzerprofile durchsucht bzw. überprüft werden, wodurch die Häufigkeit von Fehlern (d.h. einem zugangsberechtigten Nutzer wird irrtümlicherweise der Zugang verwehrt oder einem Nutzer, der nicht zugangsberechtigt ist, wird irrtümlicherweise Zugang gewährt) reduziert wird.

Je nach Verkehrsaufkommen, kann sich eine Vielzahl von mobilen elektronischen Geräten in der öffentlichen Zone befinden. In einer solchen Situation empfängt die Sende-und Empfangseinrichtung eine Vielzahl von Kennungen, die in der Speichereinrichtung gespeichert werden, und für jede gespeicherte Kennung kann ermittelt werden, ob in der Datenbank die empfangene Kennung einem Referenz-Template zugeordnet ist. Wenn solche Zuordnungen bestehen, wird geprüft, ob das Echtzeit-Template mit einem dieser Referenz-Templates übereinstimmt; bei Übereinstimmung gewährt das System dem Nutzer Zugang zur zugangsbeschränkten Zone und bei Nichtübereinstimmung verwehrt es dem Nutzer den Zugang. Der genannte Vorteil der schnellen Überprüfung ist somit auch bei hohem Verkehrsaufkommen gewährleistet, weil die Überprüfung auf Übereinstimmung auf eine begrenzte (relative kleine) Menge von Nutzerprofilen beschränkt ist.

Bei der hier beschriebenen Technologie ist zum einen die Überprüfung auf Übereinstimmung auf eine begrenzte Menge von Nutzerprofilen beschränkt. Zum anderen umfasst diese begrenzte Menge nur zugangsberechtigte Nutzer, weil nur im Fall eines zugangsberichtigen Nutzers die Kennung des mobilen Geräts einem gespeicherten Nutzerprofil zugeordnet ist. Für die Bildverarbeitungseinrichtung bedeutet dies, dass an einen darin implementierten Bildverarbeitungsalgorithmus relativ geringe Anforderungen gestellt werden, beispielsweise hinsichtlich Erkennungsgenauigkeit. Im Vergleich zu einem Bildverarbeitungsalgorithmus, dessen Aufgabe es ist, eine Person aufgrund von relativ vielen Gesichtsmerkmalen mit einer hohen Erkennungsgenauigkeit zu identifizieren (d.h., der Grad der Übereinstimmung muss relativ hoch sein, beispielsweise größer ca. 90 %), genügt es bei der hier beschriebenen Technologie, relativ wenig Gesichtsmerkmale einem der zugangsberechtigten Nutzer zuzuordnen. Außerdem kann der Grad der Übereinstimmung zum Beispiel auf zwischen ca. 60 % und ca. 90 % festgelegt werden. Es kann daher ein kostengünstiger Bildverarbeitungsalgorithmus verwendet werden; die Anforderungen an die Sicherheit können aber trotzdem gewährleistet werden.

In einem Ausführungsbeispiel umfasst das Prüfen auf Übereinstimmung ein Erzeugen eines Ergebnissignals. Bei Übereinstimmung gibt es an, dass der Nutzer Zugang zur zugangsbeschränkten Zone hat, während es bei Nichtübereinstimmung angibt, dass der Nutzer keinen Zugang zur zugangsbeschränkten Zone hat. Als Funktion des Ergebnissignals kann in einem Ausführungsbeispiel ein Steuersignal erzeugt werden, um eine (physische) Barriere (z. B. Schranke, Tür oder Drehkreuz) freizugeben. Eine nicht freigegebene Barriere bleibt blockiert. In einem anderen Ausführungsbeispiel aktiviert das Steuersignal bei einer Zugangsverwehrung eine Informationseinrichtung. Die Informationseinrichtung kann z.B. in Verbindung mit einem Zugang ohne eine physische Barriere eingesetzt werden. Wird ein unberechtigter Nutzer am Zugang erkannt, kann in einem Fall die Informationseinrichtung einen Alarm erzeugen, der am Zugang wahrnehmbar (akustisch und/oder visuell). Das Steuersignal kann in einem anderen Fall einen Sicherheitsdienst alarmieren, der daraufhin den als nicht zugangsberechtigt erkannten Nutzer überprüft.

In einem Ausführungsbeispiel erfolgt die Funkverbindung zwischen der Sende- und Empfangseinrichtung und einem mobilen elektronischen Gerät eines Nutzers gemäss einem Bluetooth-Standard oder einem WLAN/WiFi-Standard. Dies ist von Vorteil, weil handelsübliche Mobiltelefone oder Smartphones bereits mit Technologie gemäss einem dieser Standards ausgestattet sind und somit keine speziellen Geräte benötigt werden.

Die hier beschriebene Technologie ermöglicht auch Flexibilität bezgl. der Kennung eines mobilen Geräts. Die Kennung eines mobilen Geräts kann beispielsweise eine dem Gerät fest zugeordnete Geräteidentifikationsnummer oder eine dem mobilen Gerät zugeordnete Telefonnummer umfassen. In einem Ausführungsbeispiel ist jedes mobile Gerät mit einer anwendungsspezifischen Software ausgestattet, die eine für das mobile Gerät einzigartige und zeitlich unveränderliche Kennung erzeugt. Die Kennung (unabhängig davon, ob sie eine Geräteidentifikationsnummer oder eine Telefonnummer umfasst oder durch Software erzeugt) ermöglicht die eindeutige Identifikation eines mobilen Geräts.

In einem Ausführungsbeispiel ist die Bildverarbeitungseinrichtung modular aufgebaut; ein Bildverarbeitungsmodul erzeugt aus einer Kameraaufnahme das Echtzeit-Template, und ein Auswertemodul, das mit dem Bildverarbeitungsmodul und der Speichereinrichtung verbunden ist, erzeugt ein Ergebnissignal, das angibt, ob das Echtzeit-Template mit diesem Referenz-Template übereinstimmt. Eine solche Modularität erlaubt eine effiziente Anpassung der Module an unterschiedliche Anforderungen (z. B. Implementierung eines kostengünstigen Bildverarbeitungsalgorithmus im Auswertemodul).

Modularität ist in einem Ausführungsbeispiel auch bezüglich einem Prozessor gegeben, der mit der Bildverarbeitungseinrichtung verbunden ist. Abhängig vom Ergebnissignal erzeugt der Prozessor ein Steuersignal, um das Zugangskontrollsystem so zu steuern, dass dem Nutzer Zugang gewährt oder verwehrt wird.

Bei der hier beschriebenen Technologie ist es ein Vorteil, dass deren Anwendung nicht beschränkt ist auf die Art, wie der Zugang zur zugangsbeschränkten Zone gestaltet ist. Der Zugang kann eine physische Barriere, z. B. eine Schranke, eine Tür, eine Drehtür oder ein Drehkreuz, umfassen, die entweder freigegeben wird oder blockiert bleibt. Alternativ dazu kann der Zugang ohne eine solche physische Barriere (d.h. als im Wesentlichen barrierefreier Zugang) gestaltet sein. Wird mit Hilfe der hier beschriebenen Technologie ein unberechtigter Nutzer am Zugang (mit oder ohne physische Barriere) erkannt, kann ein Alarm erzeugt und/oder ein Sicherheitsdienst alarmiert werden.

In einem Ausführungsbeispiel kann die hier beschriebene Technologie in Verbindung mit einem Aufzugsystem verwendet werden. Für jeden zugangsberechtigten Nutzer kann beispielsweise ein Zielstockwerk festgelegt sein, auf dem sich beispielsweise sein Arbeitsplatz oder seine Wohnung befindet. Bei jeder Zugangsgewährung kann für den betreffenden Nutzer ein Zielruf erzeugt werden, woraufhin eine Aufzugsteuerung des Aufzugssystems eine Aufzugskabine zuerst auf ein Einsteigestockwerk und anschließend auf ein Zielstockwerk verfährt. Dadurch wird die Benutzerfreundlichkeit verbessert, weil der Nutzer direkt zu einer zugeteilten Aufzugskabine gegen kann, ohne selbst einen Aufzugsruf eingeben zu müssen.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung eines Anwendungsbeispiels eines Zugangskontrollsystems in Verbindung mit einem Gebäude;
- Fig. 2: eine schematische Darstellung eines Ausführungsbeispiels eines Zugangskontrollsystems;
- Fig. 3: ein Ablaufdiagram eines Ausführungsbeispiels eines Zugangskontrollverfahrens als ein Aspekt eines Verfahrens zum Betreiben des Zugangskontrollsystems; und
- Fig. 4: ein beispielhaftes Signaldiagramm zur Darstellung eines Ausführungsbeispiels eines Besucher-Registrierungsverfahrens als ein Aspekt eines Verfahrens zum Betreiben des Zugangskontrollsystems.

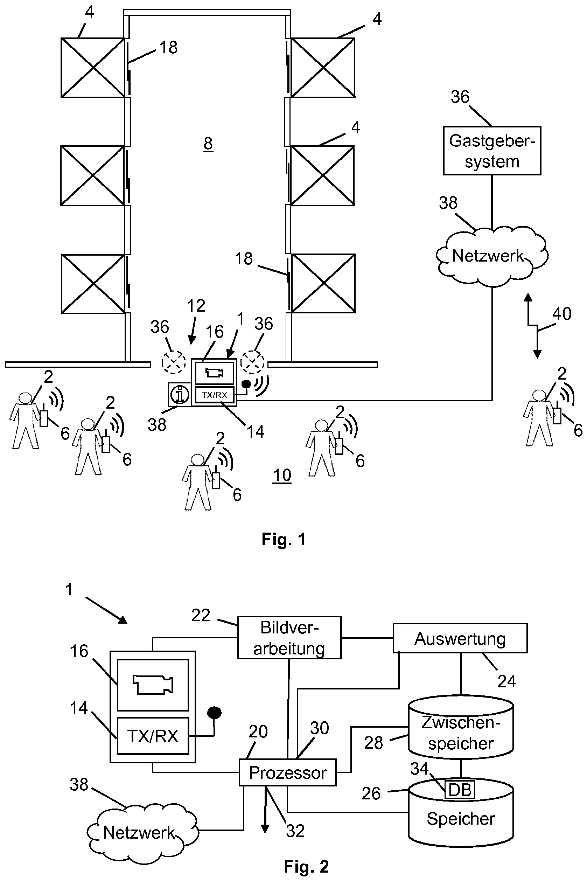

Fig. 1 ist eine schematische Darstellung eines Anwendungsbeispiels eines Zugangskontrollsystems 1 in Verbindung mit einer Situation in einem Gebäude, von dem aus Darstellungsgründen lediglich einige Wände, Räume 4 und Zonen 8, 10 gezeigt sind. Die Räume 4 können z.B. Büros, Wohnungen, Hallen und/oder Aufzugskabinen eines Aufzugsystems sein. In der in Fig. 1 gezeigten Anwendung des Zugangskontrollsystems 1 befinden sich in der Zone 10 mehrere Nutzer 2, die mobile elektronische Geräte 6 (im Folgenden auch als mobiles Gerät 6 bezeichnet), mit sich führen. Die Zone 10 unterliegt in diesem Beispiel keiner Zugangsbeschränkung und wird im Folgenden auch als öffentliche Zone 10 bezeichnet. Die öffentliche Zone 10 kann ein Bereich im oder ausserhalb des Gebäudes sein. Ein Zugang 12 trennt die öffentliche Zone 10 von der Zone 8, die einer Zugangsbeschränkung unterliegt und an die Räume 4 angrenzt. Der Fachmann erkennt, dass das Zugangskontrollsystem 1 nicht auf Anwendungen innerhalb eines Gebäudes beschränkt ist, sondern in analoger Weise auch zur Kontrolle des Zugangs zu einer zugangsbeschränkten Zone auf einem Gelände verwendet werden kann. Unter dem Begriff "Gebäude" sind in dieser Beschreibung z. B. Wohngebäude, Geschäftsgebäude, Sportarenen, Einkaufszentren, aber auch Schiffe zu verstehen.

Das Zugangskontrollsystem 1 überwacht den Zugang 12, sodass nur berechtigte Nutzer 2 in die Zone 8 gelangen können, beispielsweise durch Blockieren oder Freigeben einer Tür, einer Schranke, eines Drehkreuzes, oder einer anderen physischen Barriere, durch Aktivieren einer Informationseinrichtung 38 im Fall eines Zugangs ohne physische Barriere, wenn ein unberechtigter Nutzer 2 erkannt wird, oder durch Kombinieren dieser Massnahmen. Die Informationseinrichtung 38 kann z. B. einen optischen und/oder akustischen Alarm auslösen oder eine Benachrichtigung eines Sicherheitsdienstes veranlassen. In Fig. 1 ist das Zugangskontrollsystem 1 zur Veranschaulichung als im Zugang 12 angeordnet eingezeichnet; ausserdem ist ein Drehkreuz 36 als beispielhafte physische Barriere angedeutet. Der Fachmann erkennt jedoch, dass in einer konkreten Implementierung das Zugangskontrollsystem 1 bzw. seine Komponenten auf verschiedene Art und Weise angeordnet sein können.

In einem anderen Ausführungsbeispiel ist das Zugangskontrollsystem 1 an einem Zugang 18 zu mindestens einem Raum 4 angeordnet, eventuell an jedem Zugang 18. Je nach Art des Raums 4 umfasst der Zugang 18 beispielsweise eine Bürotür, eine Stockwerkstür, eine Wohnungstür oder eine Aufzugstür, die dann jeweils eine physische Barriere darstellen. In diesem Ausführungsbeispiel entspricht jeder Raum 4 einer zugangsbeschränkten Zone 8, und der Bereich vor einem Zugang 18 entspricht der öffentlichen Zone 10. Das Zugangskontrollsystem 1 entriegelt beispielsweise ein elektronisches Schloss einer Büro- oder Wohnungstür. In einer Anwendung in Verbindung mit einem Aufzug kann das Zugangskontrollsystem 1 beispielsweise die Abfahrt einer Aufzugskabine verhindern, wenn ein unberechtigter Nutzer 2 in die Kabine einsteigt oder einsteigen möchte.

Wie in Fig. 1 angedeutet, umfasst das Zugangskontrollsystem 1 eine Sende- und Empfangseinrichtung 14 (in Fig. 1 als TX/RX dargestellt) und eine Kamera 16 als Teil einer Bildverarbeitungseinrichtung; weitere Komponenten des Zugangskontrollsystem 1 sind in Fig. 2 gezeigt. In einem hier beschriebenen Ausführungsbeispiel ist die Sende-und Empfangseinrichtung zum Empfang von Funksignalen ausgestaltet, sie ist deshalb im Folgenden auch als Transceiver 14 bezeichnet. Der Transceiver 14 kommuniziert mit den mobilen elektronischen Geräten 6, wenn sie sich in Funkreichweite zum Transceiver 14 befinden, d.h. ein von einem mobilen Gerät 6 ausgesendetes Funksignal hat am Ort des Transceivers 14 eine Signalstärke (ausgedrückt durch einen RSSI-Wert (Received Signal Strength Indicator)), die grösser als ein für einen sicheren Empfang festgelegter Schwellenwert ist. Die Kommunikation erfolgt beispielsweise über ein Nahfeld-Funknetz wie z.B. ein Bluetooth-Funknetz, WLAN/WiFi- oder ein ZigBee-Funknetz. Bluetooth ist ein Standard gemäss IEEE 802.15.1, WLAN/WiFi ist ein Standard gemäss IEEE 802.11, Zig-Bee ist ein Standard gemäss IEEE 802.15.4; solche Funknetze gemäss diesen Standards dienen der kabellosen Vernetzung von Geräten über eine kurze Distanz von ca. einigen Metern bis ca. hundert Meter. Das Funknetz bildet dabei die Schnittstelle, über die das mobile elektronische Gerät 6 und der Transceiver 14 miteinander kommunizieren können.

In einem anderen Ausführungsbeispiel ist die Sende- und Empfangseinrichtung 14 kommunikativ an ein Kommunikationsnetzwerk 38 gekoppelt. Die Sende- und Empfangseinrichtung 14 kann in diesem Ausführungsbeispiel über das Kommunikationsnetzwerk 38 die gerätespezifische Kennung eines mobilen Geräts 6 empfangen. Das mobile Gerät 6 kann seinen momentanen Standort mit Hilfe einer darauf installierten Funktion zur Positionsbestimmung, beispielsweise basierend auf GPS (Global Positioning System) bestimmen. Mittels einer über ein Mobilfunksystem (z.B. 4G) zustande kommenden Internetverbindung (einschliesslich dem Kommunikationsnetzwerk 38) und u.U. einer anwendungsspezifischen Software kann das mobile Gerät 6 den Standort zusammen mit seiner Kennung zur Sende- und Empfangseinrichtung 14 übermitteln.

Im Folgenden werden Ausführungsbeispiele der Technologie anhand des Transceivers 14 beschrieben. Wie oben beschrieben, empfängt der Transceiver 14 eine von einem mobilen elektronischen Gerät 6 gesendete Kennung mittels einer (Nahfeld-) Funkkommunikation.

Die Kamera 16 erzeugt eine Kameraaufnahme eines Nutzers 2 (insbesondere dessen Gesichts), der sich im Erfassungsbereich der Kamera 16 befindet, wenn der Nutzer 2 am Zugang 12 die zugangsbeschränkte Zone 8 betreten möchte. In einem Ausführungsbeispiel erzeugt die Kamera 16 eine digitale Kameraaufnahme (auch als Digitalbild bezeichnet). Der Transceiver 14 und die Kamera 16 (einschliesslich anderer Komponenten der Bildverarbeitungseinrichtung) können in einem Gehäuse, das z. B. wie in Fig. 1 gezeigt im Zugang 12 angeordnet ist, angeordnet sein. Alternativ dazu können der Transceiver 14 und die Kamera 16 (einschliesslich anderer Komponenten der Bildverarbeitungseinrichtung) auch getrennt voneinander als separate Einheiten angeordnet sein, beispielsweise räumlich voneinander getrennt in einem Bereich um den Zugang 12, wobei die Kamera 16 so anzuordnen ist, dass im Wesentlichen nur derjenige Nutzer 2 erfasst wird, der auch tatsächlich Zugang wünscht.

In der in Fig. 1 gezeigten Situation ist die hier beschriebene Technologie in vorteilhafter Weise anwendbar, um das Zugangskontrollsystem 1 mit möglichst geringer Komplexität zu betreiben und dem Nutzer 2 komfortabel Zugang zur zugangsbeschränkten Zone 8 zu gewähren. Kurz und beispielhaft zusammengefasst erfolgt der Betrieb des Zugangskontrollsystems 1 gemäss einem Ausführungsbeispiel wie folgt: Sobald ein Nutzer 2 in Funkreichweite zum Transceiver 14 ist, kommuniziert sein mobiles Gerät 6 automatisch mit dem Transceiver 14 und das mobile Gerät 6 sendet seine Kennung zum Transceiver 14. In der Situation gemäss Fig. 1 empfängt der Transceiver 14 eine Vielzahl von Kennungen. Das Zugangssystem 1 "weiss" daher, wie viele mobile Geräte 6 sich zu einem bestimmten Zeitpunkt in Funkreichweite befinden und, wenn deren Nutzer 2 registrierte Nutzer 2 sind, zu welchen Nutzern 2 die mobilen Geräte 6 gehören. Diese Nutzer 2 können zu einer Gruppe von anwesenden Nutzern 2 zusammengefasst werden. Möchte nun einer der anwesenden Nutzer 2 Zugang zur zugangsbeschränkten Zone 8, ermittelt das Zugangskontrollsystem 1 im Rahmen eines Bildverarbeitungs- bzw. Gesichtserkennungsverfahrens einen Datensatz mit Gesichtsmerkmalen dieses Nutzers 2 und vergleicht diesen ermittelten Datensatz mit gespeicherten (Gesichtsmerkmals-) Datensätzen, die den anwesenden Nutzern 2 zugeordnet sind. Dieser Vergleich ist somit auf die Gruppe der anwesenden Nutzer 2 beschränkt; es werden also nur Datensätze dieser Gruppe daraufhin durchsucht, ob der ermittelte Datensatz zu einem der gespeicherten Datensätze passt. Weil nicht alle im Zugangskontrollsystem 1 angelegten Datensätze durchsucht werden müssen, läuft das Gesichtserkennungsverfahren schneller ab, und es kann schneller entschieden werden, ob der Nutzer 2 zugangsberechtigt ist oder nicht.

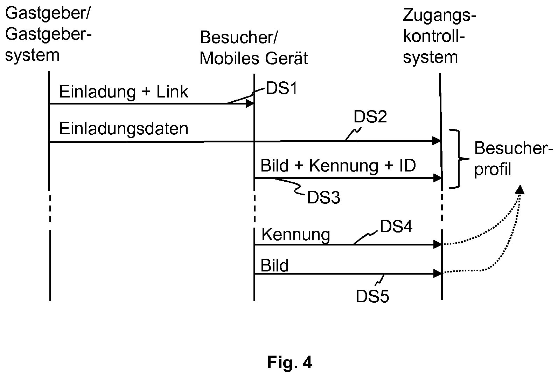

Fig. 1 zeigt ausserdem das Kommunikationsnetzwerk 38, das in einem Ausführungsbeispiel mit einem Gastgebersystem 36 und dem Zugangskontrollsystemen 1 kommunikativ verbunden ist. Ausserdem ist angedeutet, dass ein Nutzer 2 über das Kommunikationsnetzwerk 38 mittels einer Kommunikationsverbindung 40 kommunizieren kann, beispielsweise mit dem Gastgebersystem 36 oder einem Webportal. Beispielhafte Funktionen des Kommunikationsnetzwerks 38 und des Gastgebersystems 36 sind in Verbindung mit Fig. 4 beschrieben.

Fig. 2 zeigt eine schematische Darstellung eines Ausführungsbeispiels des Zugangskontrollsystems 1. Das Zugangskontrollsystems 1 ist in einem Ausführungsbeispiel modular aufgebaut und umfasst eine Bildverarbeitungseinrichtung, die neben der Kamera 16 ein Bildverarbeitungsmodul 22 (Bildverarbeitung in Fig. 2) und ein Auswertemodul 24 (Auswertung in Fig. 2) umfasst. Zusätzlich umfasst das Zugangskontrollsystem 1 neben dem Transceiver 14 einen Prozessor 20, eine Speichereinrichtung 26 (Speicher in Fig. 2) und eine Zwischenspeichereinrichtung 28 (Zwischenspeicher in Fig. 2). Der Fachmann erkennt, dass mindestens eine der Speichereinrichtungen 26, 28 auch der Bildverarbeitungseinrichtung zugeordnet werden kann oder dass die Funktion der Zwischenspeichereinrichtung 28 durch die Speichereinrichtung 26 wahrgenommen werden kann und somit die Zwischenspeichereinrichtung 28 in einem Ausführungsbeispiel entfallen kann. Der Prozessor 20 hat einen Ausgang 32 für ein Steuersignal und einen Eingang 30 für ein vom Auswertemodul 24 erzeugtes Ergebnissignal. Abhängig vom Ergebnissignal steuert der Prozessor 20 das Zugangskontrollsystem 1 so, dass dem Nutzer 2 Zugang gewährt oder verwehrt wird. Trennt beispielsweise eine physische Barriere (z.B. Drehkreuz 36 in Fig. 1) die Zonen 8, 10, gibt das Steuersignal die Barriere frei oder blockiert diese. Erfolgt die Zonentrennung dagegen ohne eine physische Barriere, steuert das Steuersignal im Fall eines unberechtigten Nutzers 2 beispielsweise die Informationseinrichtung 38 für eine Alarmerzeugung an oder alarmiert einen Sicherheitsdienst. Die Informationseinrichtung 38 kann auch angesteuert werden, um in Verbindung mit einer Barriere dem Nutzer 2 oder einem Sicherheitsdienst anzuzeigen, dass die Barriere freigegeben oder blockiert wurde.

Die Kamera 16 umfasst in einem Ausführungsbeispiel eine Digitalkamera mit auswählbaren und/oder einstellbaren Eigenschaften; Kameraaufnahmen liegen in diesem Ausführungsbeispiel somit als digitale Datensätze vor. Die Eigenschaften der Digitalkamera, zum Beispiel Auflösung (z.B. in Megapixel angegeben), Belichtung und Brennweite, sind so gewählt bzw. eingestellt, dass eine Kameraaufnahme (Digitalbild) auswertbar ist und das Gesicht des Nutzers 2 in auswertbarer Qualität auf dem Digitalbild erkennbar ist. Das Digitalbild liegt beispielsweise im JPEG Format vor, es kann aber auch in einem anderen Format vorliegen, beispielsweise im BMP oder JPEG2000 Format. Die Kamera 16 kann mit einem Sensormodul ausgestattet oder mit einem separaten Sensormodul verbunden sein, das die Kamera 16 aktiviert, wenn es die Anwesenheit eines Nutzers 2 im Erfassungsbereich der Kamera 16 detektiert. Das Sensormodul kann beispielsweise einen Näherungssensor umfassen, der als ein Ultraschallsensor, ein Infrarotsensor oder ein optischer Sensor (z.B. Lichtschranke, Helligkeitssensor) ausgestaltet sein kann. Alternativ dazu kann in einem Ausführungsbeispiel die Anwesenheit eines Nutzers 2 im Erfassungsbereich der Kamera 16 dadurch erkannt werden, dass Änderungen im Erfassungsbereich detektiert werden. Tritt der Nutzer 2 beispielsweise in den Erfassungsbereich und ist die Kamera 16 kontinuierlich in einem aktiven Zustand, zeichnet die Kamera 16 Änderungen vor einem im Wesentlichen statischen Hintergrund auf; diese Änderungen werden als Anwesenheit interpretiert.

Das Auswertemodul 24 ist zur Veranschaulichung als separate Einheit gezeigt, die mit der Bildverarbeitungsmodul 22, dem Prozessor 20 und der Zwischenspeichereinrichtung 28 verbunden ist. In einem Ausführungsbeispiel bilden das Auswertemodul 24 und das Bildverarbeitungsmodul eine Einheit. Die Speichereinrichtungen 26, 28 sind ebenfalls zur Veranschaulichung als separate Einheiten gezeigt; je nach Ausgestaltung können sie in einer Speichereinrichtung zusammengefasst sein, wo sie beispielsweise getrennte Speicherbereiche belegen. Unabhängig davon können die Speichereinrichtungen 26, 28 beispielsweise ein Festplatten (HDD)- oder CD/DVD-Laufwerk, ein Halbleiterlaufwerk/Solid-State-Disk (SSD), oder Kombinationen davon, oder andere Speichereinrichtungen für digitale Daten umfassen.

Die genannte Einheit aus Auswertemodul 24 und Bildverarbeitungsmodul 22 umfasst mindestens eine Prozessoreinheit, die ein computergestütztes Verfahren zur Bildverarbeitung ausführt. Bildverarbeitungsverfahren sind bekannt, beispielsweise aus US 8,494,231 B2. Eine grundsätzliche Darstellung der Bildverarbeitung zum Zweck der Gesichtserkennung ist in der Veröffentlichung "Gesichtserkennung" des deutschen Bundesamts für Sicherheit in der Informationstechnik (unter dem Thema Biometrie verfügbar unter der Internet-Adresse www.bsi.bund.de) beschrieben. Diese Veröffentlichung unterscheidet zwischen den drei Hauptarbeitsschritten "Template erzeugen", "Referenzdatensatz erzeugen" und "Gesichtsbilder vergleichen". Um den Vergleich zweier Gesichtsbilder möglichst einfach und schnell zu halten, werden die Merkmale eines Gesichts ermittelt und in Form eines als "Template" bezeichneten Merkmalsdatensatzes gespeichert. Wenn auf einem Bild eines Nutzers das Gesicht gefunden und normalisiert wurde, werden neben den Augen, der Nase und der Mund-/Kinnpartie weitere Merkmale gesucht, vermessen und zueinander in Bezug gesetzt. Diese extrahierten Merkmale werden codiert, komprimiert und als Merkmalsdatensatz (Template) gespeichert. Um die Ähnlichkeit der Templates zweier Gesichtsbilder zu bestimmen, werden sie mittels eines mathematischen Algorithmus kombiniert. Daraus ergibt sich ein Grad der Ähnlichkeit der Templates. Wenn das Resultat innerhalb gewisser Toleranzgrenzen liegt, werden die beiden Templates, und damit die ihnen zugrunde liegenden Gesichtsbilder als identisch eingestuft.

Gemäss der hier beschriebenen Technologie wird für jeden Nutzer 2 bei der Registrierung als zugangsberechtigter Nutzer ein Template erzeugt und in einem Nutzerprofil des Nutzers 2 gespeichert. Das Template kann aus einem Digitalbild, das das Gesicht des Nutzers 2 zeigt, erzeugt werden. Dieses Template ist im Folgenden als Referenz-Template bezeichnet. Es ist vorteilhaft, wenn bei der Registrierung das Gesicht des Nutzers 2 ähnlichen Lichtverhältnissen ausgesetzt ist wie vor Ort in der Umgebung der Kamera 16. Dies unterstützt den Vergleich von Templates, d.h. den Vergleich des Referenz-Templates mit einem Echtzeit-Template, das erzeugt wird, wenn ein Nutzer 2 Zugang zur zugangsbeschränkten Zone 8 wünscht.

In der in Fig. 1 gezeigten Situation halten sich mehrere Nutzer 2 in der öffentlichen Zone 10 auf; davon können einige Zugang zur zugangsbeschränkten Zone 8 wünschen, einige können von der Zone 8 kommend auf dem Weg zu einem Gebäudeausgang sein und wiederum andere können auf dem Weg zu einem anderen Teil des Gebäudes sein. Das bedeutet in der gezeigten Situation, dass nicht jeder Nutzer 2, der sich in der öffentlichen Zone 10 aufhält, auch tatsächlich in die Zone 8 gelangen möchte. Aus Sicht des Zugangskontrollsystems 1 sind jedoch alle anwesenden Nutzer 2 potentielle Nutzer 2, die früher oder später Zugang wünschen könnten.

Das Zugangskontrollsystem 1 ermittelt die anwesenden Nutzer 2 mit Hilfe der Kommunikation zwischen den mobilen Geräten 6 und dem Transceiver 14. In jedem mobilen Gerät 6 ist ein Funkmodul, beispielsweise ein Bluetooth Modul, aktiviert, um mit dem Transceiver 14 kommunizieren zu können, sobald es sich in Funkreichweite zum Transceiver 14 befindet. Je nach Ausgestaltung des mobilen Geräts 6 und dessen Funkmodul kann zusätzlich eine anwendungsspezifische Softwareanwendung (auch als App bezeichnet) aktiviert sein. Die anwendungsspezifische Softwareanwendung wird in einem Ausführungsbeispiel in Verbindung mit der Zugangskontrolle und der Nutzung von Aufzügen verwendet. Die anwendungsspezifische Software erzeugt in einem Ausführungsbeispiel außerdem eine für das mobile Gerät einzigartige und zeitlich unveränderliche Kennung. Eine solche durch Software erzeugte Kennung stellt eine Alternative zu der oben genannten Geräteidentifikationsnummer und einer Telefonnummer dar.

Bei der Kommunikation sendet das mobile Gerät 6 seine Kennung zum Transceiver 14; das Zugangskontrollsystem 1 aktualisiert damit eine Datenbank, in der die Kennungen aller momentan anwesenden mobilen Geräte 6 gespeichert sind. Dabei kann es sich sowohl um mobile Geräte 6 handeln, deren Nutzer 2 als zugangsberechtige Nutzer 2 im Zugangskontrollsystem 1 registriert sind, als auch um mobile Geräte 6, deren Nutzer 2 nicht registriert sind. In einem Ausführungsbeispiel befindet sich die Datenbank, die die Kennungen der anwesenden Nutzer 2 speichert, im Zwischenspeicher 28.

Für jeden registrierten Nutzer 2 ist im Zugangskontrollsystem 1 ein Nutzerprofil angelegt, d.h. es ist als Datensatz in einer Datenbank 34 gespeichert. Die Datenbank 34 ist in einem Ausführungsbeispiel in der Speichereinrichtung 26 eingerichtet. Das Nutzerprofil umfasst persönliche Daten des Nutzers 2 (z.B. Name, Berechtigungsgrund (Bewohner, Mitarbeiter, externer Dienstleister) und Gesichtsmerkmale in Form von einem Template), Zugangsberechtigungen (z.B. bestimmte Räume 4 und Stockwerke) und evtl. zeitliche Zugangsbeschränkungen (z.B. Zugang von Montag bis Freitag, von 7:00 bis 20:00). Im Nutzerprofil ist dem Nutzer 2 ausserdem mindestens ein mobiles Gerät 6 zugeordnet.

Alternativ zum Anlegen des Nutzerprofils im Zugangskontrollsystem 1 kann das Nutzerprofil in einer Datenbank eines Gebäudeverwaltungssystems angelegt sein, wobei das Zugangskontrollsystem 1 auf diese Datenbank mittels eines Kommunikationsnetzes zugreifen kann.

Wünscht einer der anwesenden Nutzer 2 Zugang zur zugangsbeschränkten Zone 8, bewegt er sich in der öffentlichen Zone 10, beispielsweise von einem Gebäudehaupteingang kommend, in Richtung des Zugangs 12. Kommt der Nutzer 2 in einen Erfassungsbereich der dort angeordneten Kamera 16, erzeugt die Kamera 16 ein oder mehrere Digitalbilder oder eine Videoaufnahme, die jeweils als digitaler Datensatz vorliegen und zur Weiterverarbeitung kurzzeitig gespeichert werden. Das Bildverarbeitungsmodul 22 ermittelt aus dem Datensatz das Echtzeit-Template, wie an anderer Stelle dieser Beschreibung ausgeführt.

Ist das Echtzeit-Template ermittelt, startet das Auswertemodul 24 einen Suchalgorithmus, um zu prüfen, ob das ermittelte Echtzeit-Template einem registrierten Nutzer 2 zugeordnet werden kann. Anstatt in der Speichereinrichtung 26 alle gespeicherten Nutzerprofile zu durchsuchen, durchsucht der Suchalgorithmus nur die Nutzerprofile der anwesenden Nutzer 2. Die Gruppe der anwesenden Nutzer 2 ist im Zwischenspeicher 28 gespeichert, wie oben beschrieben. Stimmen die ermittelten Gesichtsmerkmale mit den im Nutzerprofil des Nutzers 2 gespeicherten Gesichtsmerkmalen zu einem festgelegten Grad überein, erzeugt das Auswertemodul 24 ein Ergebnissignal, das anzeigt, dass der Nutzer 2 zugangsberechtigt ist. Gibt es dagegen keine derartige Übereinstimmung, zeigt das vom Auswertemodul 24 erzeugte Ergebnissignal an, dass der Nutzer 2 nicht zugangsberechtigt ist.

Das mobile Gerät 6 kann beispielsweise ein Mobiltelefon, ein Smartphone, ein Tablet PC oder eine Smartwatch sein, wobei diese Geräte üblicherweise mit Hardware ausgestattet sind, die eine Kommunikation über ein Nahfeld-Funknetz ermöglichen. Das mobile Gerät 6 kann aber auch eine Brille mit Miniaturcomputer oder ein anderes am Körper getragenes, computergestütztes Gerät (auch als "Wearable Device" bezeichnet) sein, wenn diese Geräte für eine Nahfeld-Kommunikation vorgesehen sind. Je nach Ausgestaltung des mobilen Geräts 6 kann es z. B. über ein graphisches Nutzerinterface (auch als Graphical User Interface, GUI, bezeichnet) verfügen, um das mobile Gerät 6 und dessen Funktionen selektiv aktivieren und deaktivieren zu können.

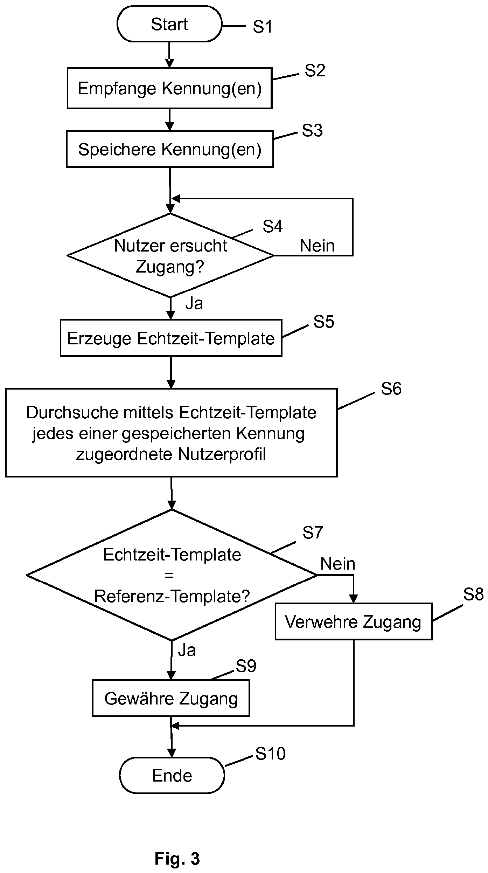

Mit dem Verständnis der oben beschriebenen prinzipiellen Systemkomponenten und deren Funktionalitäten, erfolgt im Folgenden in Verbindung mit Fig. 3 eine Beschreibung eines beispielhaften Zugangskontrollverfahrens als ein Aspekt eines Verfahrens zum Betreiben des Zugangskontrollsystems 1 (ein weiterer Aspekt ist ein in Verbindung mit Fig. 4 beschriebenes Registrierungsverfahrens für einen Besucher). Die Beschreibung erfolgt mit Bezug auf einen Nutzer 2, der am Zugang 12 die zugangsbeschränkte Zone 8 zu betreten wünscht, beispielsweise um dort einen Aufzug zu benutzen. Der Nutzer 2 trägt das mobile Gerät 2 bei sich und hat dessen Funkmodul (z.B. für Bluetooth-Kommunikation) und evtl. eine dazugehörige Softwareanwendung aktiviert. Das Verfahren beginnt in einem Schritt S1 und endet in einem Schritt S10.

Befindet sich der Nutzer 2 mit seinem mobilen Gerät 6 in der öffentlichen Zone 10 und in Funkreichweite zum Transceiver 14, empfängt der Transceiver 14 in einem Schritt S2 eine vom mobilen Gerät 6 ausgesendete Kennung. Der Transceiver 14 und das mobile Gerät 6 kommunizieren gemäss dem gleichen Kommunikationsstandard, in diesem Ausführungsbeispiel über eine Bluetooth-Funkverbindung. Die empfangene Kennung wird in einem Schritt S3 gespeichert; beispielsweise in der Zwischenspeichereinrichtung 28.

Die Schritte S2 und S3 werden für jedes mobile Gerät 6 ausgeführt, das sich in Funkreichweite zum Transceiver 14 befindet und gemäss dem gleichen Kommunikationsstandard arbeitet wie der Transceiver 14. Je nach Anzahl der Nutzer 2 in der öffentlichen Zone 10 kann zu einem bestimmten Zeitpunkt eine Vielzahl von Kennungen, entsprechend einer Gruppe von anwesenden Nutzern 2, in der Zwischenspeichereinrichtung 28 gespeichert sein. Der Fachmann erkennt, dass die Zwischenspeichereinrichtung 28 aktualisiert wird, wenn ein mobiles Gerät 6 nicht mehr in Funkreichweite ist, z. B. weil der dazugehörige Nutzer 2 die öffentliche Zone 10 verlassen hat ohne Zugang zur zugangsbeschränkten Zone 8 zu wünschen oder weil der dazugehörige Nutzer 2 bereits die zugangsbeschränkte Zone 8 betreten hat. Die Zwischenspeichereinrichtung 28 speichert somit die Kennungen der mobilen Geräte 6, deren Nutzer 2 zu einem bestimmten Zeitpunkt in der öffentlichen Zone 10 anwesend sind.

In einem Schritt S4 wird ermittelt, ob einer der anwesenden Nutzer 2 Zugang zur zugangsbeschränkten Zone 8 wünscht. Das Zugangskontrollsystem 1 erkennt diesen Wunsch gemäss einem Ausführungsbeispiel mit Hilfe des oben genannten Sensormoduls oder der Detektion von Hintergrundänderungen. Zum Beispiel detektiert das Sensormodul, wenn der Nutzer 2 in den Erfassungsbereich der Kamera 16 tritt, woraufhin die Kamera 16 aktiviert wird. Wird ein Zugangswunsch erkannt, schreitet das Verfahren entlang des Ja-Zweiges zu einem Schritt S5. Andernfalls verharrt das Verfahren in einer Schleife entlang des Nein-Zweiges.

Im Schritt S5 erzeugt die aktivierte Kamera 16 ein Digitalbild, das zumindest das Gesicht des detektierten Nutzers 2 abbildet, und das Bildverarbeitungsmodul erzeugt aus dem Digitalbild ein Echtzeit-Template, wie an anderer Stelle dieser Beschreibung ausgeführt ist.

In einem Schritt S6 wird mittels des in Schritt S5 ermittelten Echtzeit-Templates jedes einer empfangenen Kennung zugeordnete Nutzerprofil in der Datenbank 34 durchsucht. Ein Nutzerprofil wird nur dann durchsucht wird, wenn es basierend auf einer empfangenen Kennung einem anwesenden Nutzer 2 zugeordnet ist. Ersucht ein registrierter Nutzer 2 Zugang, existiert für diesen Nutzer 2 ein Nutzerprofil in der Datenbank 34, in dem die Kennung des mobilen Geräts 6 gespeichert ist. Ist der Zugang ersuchende Nutzer 2 kein registrierter Nutzer 2, ist der Kennung des mobilen Geräts 6 kein Nutzerprofil zugeordnet.

Beim Durchsuchen gemäss Schritt S6 wird in einem Schritt S7 geprüft, ob das Echtzeit-Template mit einem Referenz-Template zu einem festgelegten Grad übereinstimmt. Das Echtzeit-Template und die Referenz-Templates umfassen in einem Ausführungsbeispiel jeweils eine festgelegte Anzahl von festgelegten Gesichtsparametern und deren Werte (z. B. Augenabstand, Mundbreite, Abstand zwischen Lippenoberkante und Lippenunterkante, Abstand zwischen Nase und Lippenunterkante etc.). Beim Durchsuchen werden die Parameterwerte des Echtzeit-Templates mit den Parameterwerten der Referenz-Templates verglichen. Übereinstimmung liegt vor, wenn der Grad der Ähnlichkeit der Templates mindestens dem festgelegten Grad entspricht. Der festgelegte Grad gibt eine prozentuale Übereinstimmung der Gesichtsparameter des Echtzeit-Templates mit den Gesichtsparametern eines Referenz-Templates an. Je nach Genauigkeitsanforderung kann der festgelegte Grad beispielsweise zwischen ca. 60 % und ca. 90 % gewählt werden.

Liegt Übereinstimmung vor, schreitet das Verfahren entlang des Ja-Zweiges zu einem Schritt S9, in dem dem Nutzer 2 Zugang gewährt wird. Liegt dagegen keine Übereinstimmung vor, schreitet das Verfahren entlang des Nein-Zweiges zu einem Schritt S8 und dem Nutzer 2 wird der Zugang verwehrt.

Aus der in Verbindung mit Fig. 3 erfolgten Beschreibung eines beispielhaften Verfahrens zum Betreiben des Zugangskontrollsystems 1 ist ersichtlich, dass ein Nutzer 2 nicht mit seinem mobilen Gerät 6 hantieren muss, um Zugang zur zugangsbeschränkten Zone 8 zu erhalten. Je nach Ausgestaltung des Zugangs, d.h. mit oder ohne physischer Barriere kann die Kontrolle der Zugangsberechtigung erfolgen, ohne dass der Nutzer 2 davon etwas bemerkt.

In einem Ausführungsbeispiel ist das Zugangskontrollsystem 1 mit einem Aufzugsystem verbunden, insbesondere mit einer Aufzugsteuerung. Die Kommunikation zwischen dem Zugangskontrollsystem 1 und der Aufzugsteuerung kann über das Netzwerk 38 erfolgen. Geschieht die Zugangskontrolle beispielsweise in der Eingangshalle des Gebäudes, die die Nutzer 2 passieren müssen, um zu den Aufzügen zu gelangen, kann bei jeder Zugangsgewährung für den betreffenden Nutzer 2 ein Zielruf veranlasst werden. Die Aufzugsteuerung des Aufzugssystems verarbeitet den Zielruf und teilt ihm einen Aufzug zu. Der dem Zielruf zugeteilte Aufzug kann dem Nutzer 2 beispielsweise durch ein Terminal am Zugang 12 angezeigt und/oder mittels Sprache mitgeteilt werden. Der Nutzer 2 kann somit ohne einen Aufzugsruf eingeben zu müssen direkt zum zugeteilten Aufzug gehen.

In der in Verbindung mit Fig. 3 erfolgten Beschreibung ist jeder Nutzer 2 im Zugangskontrollsystem Ziffer 1 als zugangsberechtigter Nutzer 2 registriert. Je nach Art des Gebäudes können auch nicht registrierte Nutzer 2 Zugang zur zugangsbeschränkten Zone 8 wünschen, beispielsweise Besucher. Fig. 4 zeigt ein Signaldiagramm eines Ausführungsbeispiels eines Verfahrens, das es ermöglicht, auch Besuchern komfortabel Zugang zur zugangsbeschränkten Zone 8 zu gewähren. Um ein beispielhaftes Szenario zu illustrieren, zeigt Fig. 4 schematisch Interaktionen zwischen einem Gastgeber bzw. einem von ihm benutzten Gastgebersystem 36, einem Besucher bzw. seinem mobilen Gerät 6 und dem Zugangskontrollsystem 1, um den Besucher mittels eines Registrierungsverfahren im Kontrollsystem 1 zu registrieren. Gemäß der hier beschriebenen Technologie ist der Besucher somit ebenfalls ein Nutzer 2 (das Bezugszeichen 2 wird im Folgenden sowohl für den Besucher als auch für einen oder mehrere Nutzer verwenden).

In diesem Szenario einigen sich der Gastgeber und der Besucher 2 auf einen Termin, d.h. auf ein Datum und eine Uhrzeit bzw. einen Zeitraum, zu dem der Gastgeber den Besucher 2 erwartet. Der Gastgeber erzeugt daraufhin beispielsweise mit dem Gastgebersystem (z. B. PC, Notebook, Tablet PC, Smartphone oder mit einem anderen elektronischen Gerät) und einer darauf installierten Softwareanwendung (z. B. mit Hilfe von Outlook oder ähnlichen Anwendungsprogrammen) eine Einladung und sendet sie dem Besucher 2, beispielsweise über das Kommunikationsnetzwerk 38 und die Kommunikationsverbindung 40. Die Kommunikationsverbindung 40 kann beispielsweise über ein Mobilfunkkommunikationssystem erfolgen.

Die Einladung umfasst neben den Terminangaben, eine der Einladung zugeordnete Identifikationsnummer (in Fig. 4 als "ID" bezeichnet) und ausserdem Angaben über einen Kommunikationskanal, den der Besucher 2 für eine Kommunikation mit dem Zugangskontrollsystem 1 zum Zweck der Registrierung zu nutzen hat. In einem Ausführungsbeispiel ist der Kommunikationskanal das Internet; die Angaben zum Kommunikationskanal umfassen daher eine Internetadresse für ein Webportal (in Fig. 4 als "Link" bezeichnet). Die Internetadresse kann beispielsweise einen einheitlichen Ressourcenzeiger (Uniform Resource Locator (URL)) umfassen, der das Webportal als Ressource über die zu verwendende Zugriffsmethode (z. B. ein verwendetes Netzwerkprotokoll wie HTTP oder FTP) und den Ort der Ressource in einem Computernetzwerk identifiziert und lokalisiert. Das Webportal ist einem Computersystem des Zugangskontrollsystems 1 zugeordnet. Die Übertragung der Einladung erfolgt in einem Ausführungsbeispiel über das Kommunikationsnetzwerk 38 mittels eines Signals DS1; sie kann zum Beispiel als Textnachricht zum mobilen Gerät 6 des Besuchers 2 oder als E-Mail an die E-Mail-Adresse des Besuchers 2 erfolgen.

Der Gastgeber bzw. das Gastgebersystem 36 sendet die Daten der Einladung mittels eines Signals DS2 außerdem zum Zugangskontrollsystem 1, beispielsweise über das Kommunikationsnetzwerk 38 und im Wesentlichen gleichzeitig zum Senden der Einladung oder zu einem späteren Zeitpunkt. Das Zugangskontrollsystem 1 legt gesteuert vom Prozessor 20 für die empfangenen Einladungsdaten ein Besucherprofil an. Die Einladungsdaten umfassen in einem Ausführungsbeispiel neben den Terminangaben außerdem Angaben über den Gastgeber, beispielsweise Name, Telefonnummer, Stockwerk und/oder Wohnungs-oder Büronummer. Außerdem kann ein Zeitfenster festgelegt sein, innerhalb dessen dem Besucher 2 Zugang zu gewähren ist. Das Zeitfenster kann zum Beispiel angeben, dass der Besucher 2 ca. eine halbe Stunde vor und nach Beginn des Termins Zugang erhält, für den Fall, dass der Besucher 2 zu früh ankommt bzw. sich verspätet. Das Besucherprofil kann nach Eintreffen des Besuchers 2 oder zu einem späteren Zeitpunkt gelöscht werden.

Die Einladung fordert den Besucher 2 auf, ein Digitalbild, auf dem das Gesicht des Besuchers 2 erkennbar ist, über den angegebenen Kommunikationskanal, beispielsweise das Webportal umfassend, zum Zugangskontrollsystem 1 zu senden. Der Besucher 2 kann zum Beispiel mit der Kamera seines mobilen Geräts 6 ein aktuelles Selbstportrait (auch als "Selfie" bekannt) von sich machen und über das Webportal hochladen. In einem anderen Ausführungsbeispiel kann der Besucher 2 auch ein gespeichertes, zu einem früheren Zeitpunkt aufgenommenes Digitalbild hochladen. Ein Vorteil der hier beschriebenen Technologie ist, dass der Besucher 2 das Digitalbild zu einem von ihm gewählten Zeitpunkt hochladen kann, solange dies vor dem Termin erfolgt. Der Besucher 2 kann dabei geographisch weit entfernt vom Gebäude sein oder sich bereits im oder nahe des Gebäudes befinden.

In Verbindung mit dem Hochladen des Digitalbilds erfolgt auch eine Übertragung der Identifikationsnummer der Einladung, damit das Zugangskontrollsystem 1 das empfangene Digitalbild eindeutig der Einladung zuordnen kann. Je nach Ausgestaltung kann der Besucher aufgefordert werden, die Kennung des mobilen Geräts 6 (zum Beispiel Telefonnummer oder Geräteidentifikationsnummer) einzugeben. Lädt der Besucher das Digitalbild mittels des mobilen Geräts 6 hoch, wird in einem Ausführungsbeispiel die Kennung des mobilen Geräts 6 ebenfalls zum Zugangskontrollsystem 1 übertragen, z. B. automatisch. Ist auf dem mobilen Gerät 6 eine anwendungsspezifische Softwareanwendung installiert, wie oben beschrieben, unterstützt sie den Besucher 2 beim Hochladen des Digitalbilds. Die Übertragung des Digitalbilds, der Kennung und der Identifikationsnummer der Einladung erfolgt mittels eines Signals DS3, beispielsweise über das Kommunikationsnetzwerk 38 und die Kommunikationsverbindung 40. Die Übertragung des Signals DS3 kann gemäss einem bekannten Übertragungsprotokoll erfolgen, beispielsweise TCP (Transmission Control Protocol), IP (Internet Protocol) und UDP (User Data Protocol). Das Zugangskontrollsystem 1 speichert die empfangenen Daten (Digitalbild, Kennung und Identifikationsnummer der Einladung) im Besucherprofil.

Die hier beschriebene Technologie kann auch andere Kommunikationskanäle nutzen. Alternativ zur Nutzung eines Webportals kann die Einladung den Besucher 2 auffordern, das Digitalbild, die Kennung und die Identifikationsnummer der Einladung an eine Gebäudeverwaltung zu übermitteln. Die Gebäudeverwaltung kann beispielsweise für das betreffende Gebäude die Datenbank 34 verwalten, in der die Nutzerprofile der zugangsberechtigten Nutzer 2 gespeichert sind. Die Übermittlung an die Gebäudeverwaltung kann beispielsweise an eine in der Einladung angegebene E-Mail-Adresse der Gebäudeverwaltung oder Telefonnummer der Gebäudeverwaltung, beispielsweise für eine SMS oder MMS Nachricht, erfolgen. Personal der Gebäudeverwaltung kann dann die Weiterverarbeitung der empfangenen Daten veranlassen.

In einem Ausführungsbeispiel steuert der in Fig. 2 gezeigte Prozessor 20 den Empfang und die Weiterverarbeitung des Digitalbilds, der Kennung und der Identifikationsnummer der Einladung. Das Zugangskontrollsystem 1 erzeugt mit Hilfe der Bildverarbeitungseinrichtung 22 aus dem Digitalbild des Besuchers 2 ein Referenz-Template, wie in Verbindung mit Fig. 2 beschrieben, und speichert das Referenz-Template im Besucherprofil. Das Besucherprofil ist damit gemäß einem Ausführungsbeispiel für den Zweck der Zugangskontrolle vollständig, und das Registrierungsverfahren, durch das der Besucher 2 im Zugangskontrollsystem 1 registriert wird, ist abgeschlossen. Durch Zugriff auf das Besucherprofil, beispielsweise mittels der Kennung des mobilen Geräts 6 des Besuchers 2, können das Referenz-Template und die Einladungsdaten gelesen werden.

Nachdem das Besucherprofil angelegt ist, kann dem Besucher 2 gemäss dem in Verbindung mit Fig. 3 beschriebenen Zugangskontrollverfahren Zugang gewährt werden, wenn er zum vereinbarten Termin im Gebäude erscheint. Sobald der Besucher in der öffentlichen Zone 10 in den Empfangsbereich des Transceivers 14 kommt, empfängt der Transceiver 14 die vom mobilen Gerät 6 ausgesendete Kennung. Der Empfang der Kennung des mobilen Geräts 6 erfolgt wie oben beschrieben und ist in Fig. 4 mittels eines Signals DS4 dargestellt. Kommt der Besucher daran anschließend in den Erkennungsbereich der Kamera 16, erzeugt die Kamera 16 ein Digitalbild, das das Gesicht des Besuchers zeigt. Das Erzeugen des Digitalbilds durch die Kamera 16 und die daran anschließende Erzeugung eines Echtzeit-Templates erfolgen wie oben beschrieben; in Fig. 4 ist dies durch ein Signal DS 5 dargestellt.

Das Zugangskontrollsystem 1 prüft, ob das Echtzeit-Template mit dem Referenz-Template zum festgelegten Grad übereinstimmt. Zusätzlich prüft das Zugangskontrollsystem 1, ob der Besucher innerhalb des Zeitfensters, das im Besucherprofil festgelegt ist, Zugang ersucht. Sind beide Bedingungen erfüllt, wird dem Besucher Zugang gewährt.

In einem Ausführungsbeispiel erzeugt und sendet das Zugangskontrollsystem 1 eine Nachricht für den Gastgeber, die den Gastgeber darüber informiert, dass dem Besucher Zugang gewährt wurde. Der Gastgeber kann sich somit zeitnah auf das Erscheinen des Besuchers vorbereiten.

Je nach Ausgestaltung des Gebäudes, kann das Zugangskontrollsystem 1 mit einer Aufzugssteuerung kommunizieren, um mit der Gewährung des Zugangs einen Zielruf für den Besucher 2 zu erzeugen. Die Aufzugssteuerung teilt dem Zielruf einen Aufzug zu, wobei der zugeteilte Aufzug dem Besucher 2 im Bereich des Zugangs 12 durch Anzeige oder Sprache mitgeteilt werden kann. Der zugewiesene Aufzug transportiert den Besucher 2 auf das Stockwerk, auf dem sich der Gastgeber befindet. Das Stockwerk des Gastgebers ist beispielsweise im Besucherprofil in Verbindung mit den Einladungsdaten gespeichert. Der Besucher 2, vor allem wenn er erstmalig Gebäude ist, braucht sich somit nicht mit der Eingabe des Zielstockwerks zu befassen. Dem Besucher 2 kann außerdem weitere Information zur Verfügung gestellt werden, um sich im Gebäude besser orientieren zu können, beispielsweise kann dem Besucher 2 mitgeteilt werden, in welche Richtung (eventuell auch wie weit) er nach dem Aussteigen auf dem Stockwerk gehen soll. Die Mitteilung solcher Wegeleitungs-Information kann beispielsweise mittels des mobilen Geräts 6 des Besuchers 2 und/oder Anzeigen auf den Stockwerken oder in der Aufzugskabine erfolgen.

## Patentansprüche

1. Verfahren zum Betreiben eines Systems (1) zur Kontrolle eines Zugangs zu einer zugangsbeschränkten Zone (8) in einem Gebäude oder einem Gelände, wobei das System (1) eine Sende- und Empfangseinrichtung (14), eine Speichereinrichtung (26, 28), die eine Datenbank (34) enthält, in der eine Vielzahl von Nutzerprofilen von zugangsberechtigten Nutzern (2) angelegt ist, einen Prozessor (20) und eine Bildverarbeitungseinrichtung (16, 22, 24), die eine am Zugang zur zugangsbeschränkten Zone (8) angeordnete Kamera (16) aufweist, umfasst, das Verfahren umfassend:
Empfangen einer gerätespezifischen Kennung eines mobilen elektronischen Geräts (6) eines Nutzers (2) durch die Sende- und Empfangseinrichtung (14), wenn sich das mobile elektronische Gerät (6) in Funkreichweite zur Sende- und Empfangseinrichtung (14) in einer öffentlichen Zone (10) befindet, von der aus der in der öffentlichen Zone (10) anwesende Nutzer (2) Zugang zur zugangsbeschränkten Zone (8) ersuchen kann;
Speichern der empfangenen Kennung des mobilen elektronischen Geräts (6) in einer weiteren Datenbank der Speichereinrichtung (26, 28) als zu einem anwesenden Nutzer (2) gehörend, wobei die weitere Datenbank ausgestaltet ist, Kennungen von in der öffentlichen Zone (10) momentan anwesenden mobilen elektronischen Geräten (6) zu speichern, wobei ein solches mobiles elektronisches Gerät (6) einem im Zugangskontrollsystem (1) registrierten oder nicht registriertem Nutzer (2) zugeordnet ist und wobei die Kennung eines einem registrierten Nutzer (2) zugeordneten mobilen elektronischen Geräts (6) einem in der Datenbank (34) der Speichereinrichtung (26, 28) gespeicherten Nutzerprofil des registrierten Nutzers (2) zugeordnet ist;
Erzeugen eines Echtzeit-Templates für Gesichtsmerkmale eines anwesenden Nutzers (2) aus einer von der Kamera (16) der Bildverarbeitungseinrichtung (16, 22, 24) erzeugten Kameraaufnahme des anwesenden Nutzers (2), wenn eine Präsenz des anwesenden Nutzers (2) in einem Erfassungsbereich der Kamera (16) erkannt wird, wenn der anwesende Nutzer (2) Zugang zur zugangsbeschränkten Zone (8) ersucht, wobei das Echtzeit-Template durch die Bildverarbeitungseinrichtung (16, 22, 24) erzeugt wird; und
Durchsuchen der in der Datenbank (34) gespeicherten Nutzerprofile nach einem Referenz-Template, das mit dem Echtzeit-Template zu einem festgelegten Grad übereinstimmt, wobei ein Nutzerprofil nur dann durchsucht wird, wenn es basierend auf einer empfangenen und in der weiteren Datenbank gespeicherten Kennung einem anwesenden Nutzer (2) zugeordnet ist, wobei bei Übereinstimmung das System (1) dem Nutzer (2) Zugang zur zugangsbeschränkten Zone (8) gewährt und bei Nichtübereinstimmung verwehrt.

2. Verfahren nach Anspruch 1, bei dem, wenn sich eine Vielzahl von mobilen elektronischen Geräten (6) in der öffentlichen Zone (10) befindet,
- eine Vielzahl von empfangenen Kennungen in der weiteren Datenbank der Speichereinrichtung (26, 28) gespeichert wird,
- für jede gespeicherte Kennung ermittelt wird, ob in der Datenbank (34) die empfangene Kennung einem Nutzerprofil mit einem Referenz-Template zugeordnet ist; und,
- wenn solche Zuordnungen bestehen, Prüfen, ob das Echtzeit-Template mit einem dieser Referenz-Templates zu einem festgelegten Grad übereinstimmt, wobei bei Übereinstimmung das System (1) dem Nutzer (2) Zugang zur zugangsbeschränkten Zone (8) gewährt und bei Nichtübereinstimmung verwehrt.

3. Verfahren nach Anspruch 1 oder 2, ausserdem umfassend Erzeugen eines Ergebnissignals, das bei Übereinstimmung angibt, dass der Nutzer (2) Zugang zur zugangsbeschränkten Zone (8) hat und das bei Nichtübereinstimmung angibt, dass der Nutzer (2) keinen Zugang zur zugangsbeschränkten Zone (8) hat.

4. Verfahren nach Anspruch 3, ausserdem aufweisend Erzeugen eines Steuersignals als Funktion des Ergebnissignals, um eine Barriere (18, 36) freizugeben.

5. Verfahren nach Anspruch 3 oder 4, ausserdem aufweisend Erzeugen eines Steuersignals als Funktion des Ergebnissignals, um bei einer Zugangsverwehrung eine Informationseinrichtung (38) zu aktivieren.

6. Verfahren nach einem der vorhergehenden Ansprüche, bei dem die Sende- und Empfangseinrichtung (14) mit einem mobilen elektronischen Gerät (6) mittels einer Funkverbindung kommuniziert, wobei die Funkverbindung zwischen der Sende- und Empfangseinrichtung (14) und einem mobilen elektronischen Gerät (6) eines Nutzers (2) gemäss einem Bluetooth-Standard oder einem WLAN/WiFi-Standard erfolgt, und wobei die Sende- und Empfangseinrichtung (14) die gerätespezifische Kennung über die Funkverbindung empfängt, wenn sich das mobile elektronische Gerät (6) in Funkreichweite der Sende- und Empfangseinrichtung (14) befindet.

7. Verfahren nach einem der Ansprüche 1-6, bei dem die Sende- und Empfangseinrichtung (14) die gerätespezifische Kennung mittels eines Kommunikationsnetzwerks (38) empfängt.

8. Verfahren nach einem der vorhergehenden Ansprüche, bei dem die Kennung von einer anwendungsspezifischen Software, die auf dem mobilen Gerät (6) aktiv ist, erzeugt wird, wobei die Kennung zeitlich unveränderlich ist.

9. Verfahren nach einem der Ansprüche 1-7, bei dem die Kennung eine Geräteidentifikationsnummer oder eine einem mobilen Gerät (6) zugeordnete Telefonnummer umfasst.

10. Verfahren nach einem der vorhergehenden Ansprüche, bei dem das Echtzeit-Template und die Referenz-Templates jeweils eine festgelegte Anzahl von festgelegten Gesichtsparametern umfassen, und bei dem der festgelegte Grad zwischen 60 % und 90 % liegt, wobei der festgelegte Grad eine prozentuale Übereinstimmung der Gesichtsparameter des Echtzeit-Templates mit den Gesichtsparametern eines Referenz-Templates angibt.

11. Verfahren nach einem der vorhergehenden Ansprüche, außerdem aufweisend erzeugen eines Zielrufs für eine Aufzugsanlage, wenn dem Nutzer (2) Zugang gewährt wird.

12. System (1) zur Kontrolle eines Zugangs zu einer zugangsbeschränkten Zone (8) in einem Gebäude oder einem Gelände, wobei das System (1) umfasst:
eine Sende- und Empfangseinrichtung (14), die zu einem Empfang einer gerätespezifischen Kennung eines mobilen elektronischen Geräts (6) eines Nutzers (2) ausgestaltet ist;
eine Speichereinrichtung (26, 28), die ausgestaltet ist, die von der Sende-und Empfangseinrichtung (14) empfangene Kennung des mobilen elektronischen Geräts (6) als zu einem in einer öffentlichen Zone (10) anwesenden Nutzer (2) gehörend zu speichern, wenn sich das mobile elektronische Gerät (6) in Funkreichweite zur Sende- und Empfangseinrichtung (14) in einer öffentlichen Zone (10) befindet, von der aus der in der öffentlichen Zone (10) anwesende Nutzer (2) Zugang zur zugangsbeschränkten Zone (8) ersuchen kann, wobei die Speichereinrichtung (26, 28) eine Datenbank (34) enthält, in der eine Vielzahl von Nutzerprofilen von zugangsberechtigten Nutzern (2) angelegt ist, und die eine weitere Datenbank enthält, die ausgestaltet ist, Kennungen von in der öffentlichen Zone (10) momentan anwesenden mobilen elektronischen Geräten (6) zu speichern, wobei ein solches mobiles elektronisches Gerät (6) einem im Zugangskontrollsystem (1) registrierten oder nicht registriertem Nutzer (2) zugeordnet ist und wobei die Kennung eines einem registrierten Nutzer (2) zugeordneten mobilen elektronischen Geräts (6) einem in der Datenbank (34) der Speichereinrichtung (26, 28) gespeicherten Nutzerprofil des registrierten Nutzers (2) zugeordnet ist; und
eine Bildverarbeitungseinrichtung (16, 22, 24),
- die eine am Zugang zur zugangsbeschränkten Zone (8) angeordnete Kamera (16) aufweist;
- die ausgestaltet ist, um aus einer von der Kamera (16) erzeugten Kameraaufnahme ein Echtzeit-Template für Gesichtsmerkmale des anwesenden Nutzers (2) zu erzeugen, wenn der anwesende Nutzer (2) Zugang zur zugangsbeschränkten Zone (8) ersucht,
- die ausgestaltet ist, um die in der Datenbank (34) gespeicherten Nutzerprofile nach einem Referenz-Template zu durchsuchen, das mit dem Echtzeit-Template zu einem festgelegten Grad übereinstimmt, wobei ein Nutzerprofil nur dann durchsucht wird, wenn es basierend auf einer empfangenen und in der weiteren Datenbank gespeicherten Kennung einem anwesenden Nutzer zugeordnet ist, wobei bei Übereinstimmung das System (1) dem Nutzer (2) Zugang gewährt und bei Nichtübereinstimmung verwehrt.

13. System (1) nach Anspruch 12, bei dem die Bildverarbeitungseinrichtung (16, 22, 24) ein Bildverarbeitungsmodul (22), das ausgestaltet ist, um aus der Kameraaufnahme das Echtzeit-Template zu erzeugen, und ein Auswertemodul (24), das mit dem Bildverarbeitungsmodul (22) und der Speichereinrichtung (26, 28) verbunden ist, umfasst, wobei das Auswertemodul (24) ausgestaltet ist, um ein Ergebnissignal zu erzeugen, das angibt, ob das Echtzeit-Template mit diesem Referenz-Template übereinstimmt.

14. System (1) nach Anspruch 13, ausserdem aufweisend einen Prozessor (20), der mit der Bildverarbeitungseinrichtung (16, 22, 24) verbunden ist und der ausgestaltet ist, um abhängig vom Ergebnissignal ein Steuersignal zu erzeugen, um das Zugangskontrollsystem (1) so zu steuern, dass dem Nutzer (2) Zugang gewährt oder verwehrt wird.

## Claims

1. Method for operating a system (1) for controlling access to a restricted access zone (8) in a building or a site, wherein the system (1) comprises a transmitting and receiving device (14), a storage device (26, 28) containing a database (34) in which a plurality of user profiles of users (2) authorized to access are stored, a processor (20), and an image processing device (16, 22, 24) which has a camera (16) located at the entrance to the restricted access zone (8), the method comprising:
receiving, by the transmitting and receiving device (14), a device-specific identifier of a mobile electronic device (6) of a user (2) when the mobile electronic device (6) is within radio range of the transmitting and receiving device (14) in a public zone (10) from which the user (2) present in the public zone (10) can request access to the restricted access zone (8);
storing the received identifier of the mobile electronic device (6) in a further database of the storage device (26, 28) as belonging to a user (2) present, wherein the further database is designed to store identifiers of mobile electronic devices (6) currently present in the public zone (10), wherein such a mobile electronic device (6) is assigned to a user (2) registered or not registered in the access control system (1) and wherein the identifier of a mobile electronic device (6) assigned to a registered user (2) is assigned to a user profile of the registered user (2) stored in the database (34) of the storage device (26, 28);
generating, from a camera recording of the user (2) present generated by the camera (16) of the image processing device (16, 22, 24), a real-time template for facial features of a user (2) present when a presence of the user (2) present is recognized in a detection range of the camera (16) when the user (2) present requests access to the restricted access zone (8), wherein the real-time template is generated by the image processing device (16, 22, 24); and
searching the user profiles stored in the database (34) for a reference template that matches the real-time template to a specified degree, wherein a user profile is searched only if it is assigned to a user (2) present based on a received identifier stored in the further database, wherein, in case of a match, the system (1) grants the user (2) access to the restricted access zone (8) and denies access if there is no match.

2. Method according to claim 1, in which, when a plurality of mobile electronic devices (6) are located in the public zone (10),
- a plurality of received identifiers are stored in the further database of the storage device (26, 28),
- for each stored identifier, it is determined whether, in the database (34), the received identifier is assigned to a user profile having a reference template; and,
- if such assignments exist, checking to see whether the real-time template matches one of these reference templates to a specified degree, wherein, in the case of a match, the system (1) grants the user (2) access to the restricted access zone (8) and denies access if there is no match.

3. Method according to claim 1 or 2, further comprising generating a result signal, which indicates, in the case of a match, that the user (2) has access to the restricted access zone (8) and, if there is no match, indicates that the user (2) has no access to the restricted access zone (8).

4. Method according to claim 3, further comprising generating a control signal as a function of the result signal to release a barrier (18, 36).

5. Method according to claim 3 or 4, further comprising generating a control signal as a function of the result signal to activate an information device (38) if access is denied.

6. Method according to any of the preceding claims, in which the transmitting and receiving device (14) communicates with a mobile electronic device (6) by means of a radio link, wherein the radio link between the transmitting and receiving device (14) and a mobile electronic device (6) of a user (2) takes place in accordance with a Bluetooth standard or a WLAN/WiFi standard, and wherein the transmitting and receiving device (14) receives the device-specific identifier via the radio link when the mobile electronic device (6) is located within radio range of the transmitting and receiving device (14).

7. Method according to any of claims 1-6, in which the transmitting and receiving device (14) receives the device-specific identifier by means of a communication network (38).

8. Method according to any of the preceding claims, in which the identifier is generated by application-specific software, which is active on the mobile device (6), wherein the identifier does not vary over time.

9. Method according to any of claims 1-7, in which the identifier comprises a device identification number or a telephone number assigned to a mobile device (6).

10. Method according to any of the preceding claims, in which the real-time template and the reference templates each comprise a specified number of specified facial parameters, and in which the specified degree is between 60% and 90%, wherein the specified degree indicates a percentage match of the facial parameters of the real-time template with the facial parameters of a reference template.

11. Method according to any of the preceding claims, further comprising generating a destination call for an elevator system if the user (2) is granted access.

12. System (1) for controlling access to a restricted access zone (8) in a building or a site, wherein the system (1) comprises:
a transmitting and receiving device (14), which is designed to receive a device-specific identifier of a mobile electronic device (6) of a user (2);
a storage device (26, 28), which is designed to store the identifier of the mobile electronic device (6), received by the transmitting and receiving device (14), as belonging to a user (2) present in a public zone (10) when the mobile electronic device (6) is within radio range of the transmitting and receiving device (14) in a public zone (10) from which the user (2) present in the public zone (10) can request access to the restricted access zone (8), wherein the storage device (26, 28) contains a database (34) in which a plurality of user profiles of users (2) who are authorized to access are created, and which contains a further database which is designed to store identifiers of mobile electronic devices (6) currently present in the public zone (10), wherein such a mobile electronic device (6) can be assigned to a user (2) registered or not registered in the access control system (1) and wherein the identifier of a mobile electronic device (6) associated with a registered user (2) is associated with a user profile of the registered user (2) stored in the database (34) of the storage device (26, 28); and
an image processing device (16, 22, 24),
- which has a camera (16) located at the entrance to the restricted access zone (8);
- which is designed to generate, from a camera recording generated by the camera (16), a real-time template for facial features of the user (2) present when the user (2) present requests access to the restricted access zone (8),
- which is designed to search the user profiles stored in the database (34) for a reference template that matches the real-time template to a specified degree, wherein a user profile is searched only if it is assigned to a user present based on a received identifier stored in the further database, wherein in the event of a match the system (1) grants the user (2) access and denies access if there is no match.

13. System (1) according to claim 12, in which the image processing device (16, 22, 24) comprises an image processing module (22), which is designed to generate, from the camera recording, the real-time template, and an evaluation module (24), which is connected to the image processing module (22) and the storage device (26, 28), wherein the evaluation module (24) is designed to generate a result signal which indicates whether the real-time template matches this reference template.

14. System (1) according to claim 13, further comprising a processor (20) which is connected to the image processing device (16, 22, 24) and is designed to generate a control signal depending on the result signal to control the access control system (1) such that the user (2) is granted or denied access.

## Revendications

1. Procédé permettant de faire fonctionner un système (1) pour le contrôle d'un accès à une zone à accès restreint (8) dans un bâtiment ou sur un terrain, dans lequel le système (1) comprend un dispositif de transmission et de réception (14), un dispositif de mémorisation (26, 28) qui contient une base de données (34) dans laquelle sont créés une pluralité de profils utilisateurs d'utilisateurs (2) ayant le droit à l'accès, un processeur (20) et un dispositif de traitement d'images (16, 22, 24) qui présente une caméra (16) disposée au niveau de l'accès à la zone à accès restreint (8), le procédé comprenant :
la réception d'un identifiant spécifique à un appareil d'un appareil électronique (6) mobile d'un utilisateur (2) par le dispositif de transmission et de réception (14) lorsque l'appareil électronique mobile (6) se trouve à portée radio du dispositif de transmission et de réception (14) dans une zone publique (10) à partir de laquelle l'utilisateur (2) présent dans la zone publique (10) peut demander l'accès à la zone à accès restreint (8) ;
la mémorisation de l'identifiant reçu de l'appareil électronique mobile (6) dans une autre base de données du dispositif de mémorisation (26, 28) comme appartenant à un utilisateur (2) présent, dans lequel l'autre base de données est configurée pour mémoriser des identifiants d'appareils électroniques mobiles (6) actuellement présents dans la zone publique (10), dans lequel un tel appareil électronique mobile (6) est associé à un utilisateur (2) enregistré ou non enregistré dans le système de contrôle d'accès (1) et dans lequel l'identifiant d'un appareil électronique mobile (6) associé à un utilisateur (2) enregistré est associé à un profil utilisateur de l'utilisateur (2) enregistré, lequel profil utilisateur est mémorisé dans la base de données (34) du dispositif de mémorisation (26, 28) ;
la génération d'un modèle en temps réel pour des caractéristiques faciales d'un utilisateur (2) présent à partir d'un enregistrement de caméra de l'utilisateur (2) présent, lequel enregistrement est généré par la caméra (16) du dispositif de traitement d'images (16, 22, 24), lorsqu'une présence de l'utilisateur (2) présent est détectée dans une zone de détection de la caméra (16), lorsque l'utilisateur (2) présent demande l'accès à la zone à accès restreint (8), dans lequel le modèle en temps réel est généré par le dispositif de traitement d'images (16, 22, 24) ;
la recherche parmi les profils utilisateurs mémorisés dans la base de données (34) d'un modèle de référence qui correspond, à un degré défini, au modèle en temps réel, dans lequel un profil utilisateur n'est recherché que s'il est associé à un utilisateur (2) présent sur la base d'un identifiant reçu et mémorisé dans l'autre base de données, dans lequel, en cas de correspondance, le système (1) accorde l'accès à la zone à accès restreint (8) à l'utilisateur (2) et refuse l'accès en cas de non-correspondance.

2. Procédé selon la revendication 1, dans lequel, lorsqu'une pluralité d'appareils électroniques mobiles (6) se trouvent dans la zone publique (10),
- une pluralité d'identifiants reçus sont mémorisés dans l'autre base de données du dispositif de mémorisation (26, 28),
- pour chaque identifiant mémorisé, on détermine si, dans la base de données (34), l'identifiant reçu est associé à un profil utilisateur comportant un modèle de référence ; et,
- lorsqu'il existe de telles associations, on vérifie si le modèle en temps réel correspond, à un degré défini, à l'un desdits modèles de référence, dans lequel, en cas de correspondance, le système (1) accorde l'accès à la zone à accès restreint (8) à l'utilisateur (2) et refuse l'accès en cas de non-correspondance.

3. Procédé selon la revendication 1 ou 2, comprenant en outre la génération d'un signal de résultat qui indique, en cas de correspondance, que l'utilisateur (2) a accès à la zone à accès restreint (8) et qui indique, en cas de non-correspondance, que l'utilisateur (2) n'a pas accès à la zone à accès restreint (8).

4. Procédé selon la revendication 3, présentant en outre la génération d'un signal de commande en fonction du signal de résultat afin de débloquer une barrière (18, 36).

5. Procédé selon la revendication 3 ou 4, présentant en outre la génération d'un signal de commande en fonction du signal de résultat afin d'activer un dispositif d'information (38) si l'accès est refusé.

6. Procédé selon l'une des revendications précédentes, dans lequel le dispositif de transmission et de réception (14) communique avec un appareil électronique mobile (6) à l'aide d'une connexion radio, dans lequel la connexion radio entre le dispositif de transmission et de réception (14) et un appareil électronique mobile (6) d'un utilisateur (2) est effectuée conformément à une norme Bluetooth ou une norme WLAN/Wi-Fi, et dans lequel le dispositif de transmission et de réception (14) reçoit l'identifiant spécifique à l'appareil par l'intermédiaire de la connexion radio lorsque l'appareil électronique mobile (6) se trouve à portée radio du dispositif de transmission et de réception (14).

7. Procédé selon l'une des revendications 1 à 6, dans lequel le dispositif de transmission et de réception (14) reçoit l'identifiant spécifique à l'appareil par l'intermédiaire d'un réseau de communication (38).

8. Procédé selon l'une des revendications précédentes, dans lequel l'identifiant est généré par un logiciel spécifique à une application, lequel logiciel est actif sur l'appareil mobile (6), dans lequel l'identifiant est invariable dans le temps.

9. Procédé selon l'une des revendications 1 à 7, dans lequel l'identifiant comprend un numéro d'identification d'appareil ou un numéro de téléphone associé à un appareil mobile (6).

10. Procédé selon l'une des revendications précédentes, dans lequel le modèle en temps réel et les modèles de référence comprennent respectivement un nombre défini de paramètres faciaux définis, et dans lequel le degré défini est compris entre 60 % et 90 %, dans lequel le degré défini indique un pourcentage de correspondance des paramètres faciaux du modèle en temps réel avec les paramètres faciaux d'un modèle de référence.

11. Procédé selon l'une des revendications précédentes, présentant en outre la génération d'un appel de destination pour une installation d'ascenseur lorsque l'accès est accordé à l'utilisateur (2).

12. Système (1) pour le contrôle d'un accès à une zone à accès restreint (8) dans un bâtiment ou sur un terrain, dans lequel le système (1) comprend :
un dispositif de transmission et de réception (14) qui est configuré pour une réception d'un identifiant spécifique à un appareil d'un appareil électronique mobile (6) d'un utilisateur (2) ;
un dispositif de mémorisation (26, 28) qui est configuré pour mémoriser l'identifiant de l'appareil électronique mobile (6) reçu par le dispositif de transmission et de réception (14) comme appartenant à un utilisateur (2) présent dans une zone publique (10), lorsque l'appareil électronique mobile (6) se trouve à portée radio du dispositif de transmission et de réception (14) dans une zone publique (10) à partir de laquelle l'utilisateur (2) présent dans la zone publique (10) peut demander l'accès à la zone à accès restreint (8), dans lequel le dispositif de mémorisation (26, 28) contient une base de données (34) dans laquelle sont créés une pluralité de profils utilisateurs d'utilisateurs (2) ayant le droit à l'accès, et contient une autre base de données qui est configurée pour mémoriser des identifiants d'appareils électroniques mobiles (6) actuellement présents dans la zone publique (10), dans lequel un tel appareil électronique mobile (6) est associé à un utilisateur (2) enregistré ou non enregistré dans le système de contrôle d'accès (1) et dans lequel l'identifiant d'un appareil électronique mobile (6) associé à un utilisateur (2) enregistré est associé à un profil utilisateur de l'utilisateur (2) enregistré, lequel profil utilisateur est mémorisé dans la base de données (34) du dispositif de mémorisation (26, 28) ; et
un dispositif de traitement d'images (16, 22, 24),
- qui présente une caméra (16) disposée au niveau de l'entrée de la zone à accès restreint (8) ;
- qui est configuré pour générer, à partir d'un enregistrement de caméra généré par la caméra (16), un modèle en temps réel pour des caractéristiques faciales de l'utilisateur (2) présent lorsque l'utilisateur (2) présent demande l'accès à la zone à accès restreint (8),
- qui est configuré pour rechercher parmi les profils utilisateurs mémorisés dans la base de données (34) un modèle de référence qui correspond au modèle en temps réel à un degré défini, dans lequel un profil utilisateur n'est recherché que s'il est associé à un utilisateur présent sur la base d'un identifiant reçu et mémorisé dans l'autre base de données, dans lequel, en cas de correspondance, le système (1) accorde l'accès à l'utilisateur (2) et refuse l'accès en cas de non-correspondance.

13. Système (1) selon la revendication 12, dans lequel le dispositif de traitement d'images (16, 22, 24) comprend un module de traitement d'images (22) qui est configuré pour générer le modèle en temps réel à partir de l'enregistrement de caméra, et un module d'évaluation (24) qui est connecté au module de traitement d'images (22) et au dispositif de mémorisation (26, 28), dans lequel le module d'évaluation (24) est configuré pour générer un signal de résultat qui indique si le modèle en temps réel correspond audit modèle de référence.

14. Système (1) selon la revendication 13, présentant en outre un processeur (20) qui est connecté au dispositif de traitement d'images (16, 22, 24) et qui est configuré pour générer un signal de commande en fonction du signal de résultat afin de commander le système de contrôle d'accès (1) de manière à autoriser ou à refuser l'accès à l'utilisateur (2).
